# EUROPEAN PATENT APPLICATION

(11) **EP 4 474 335 A1**
(43) Date of publication of application: **11.12.2024**
(21) Application number: 23178500.7
(22) Date of filing: 09.06.2023
(51) Int. Cl.: B66F 9/06, B66F 9/075, B65G 1/137

(54) **MATERIAL HANDLING VEHICLE, WAREHOUSERACK AND A WAREHOUSE SYSTEM**

(71) Applicant: Toyota Material Handling Manufacturing Sweden AB, 595 81 Mjölby (SE)
(72) Inventor: KHUDAIR, Haider, 602 34 Norrköping (SE)
(74) Representative: Zacco Sweden AB

(57) **Abstract**

The present disclosure is related to a material handling vehicle (1), a warehouse rack (20), a warehouse system (30), a method for modifying a warehouse rack, and a method for modifying a material handling vehicle (1). In general the material handling vehicle controllable from entering an already occupied warehouse aisle, by the use of a control unit (25) controlling the material handling vehicle (1) by information given from a first sensor device (10) on the material handling vehicle.

## Description

The present patent application is related to a, a material handling vehicle according to claim 6, a warehouse rack according to claim 9, a warehouse system according to claim 13, a method of modifying a warehouse rack according to claim 16 and a method of modifying a material handling vehicle according to claim 17.

### BACKGROUND

In operation of material handling vehicles inside a warehouse, there are situations where there are several material handling vehicles moving at the same time on the warehouse floor. It is in general so that the operators of the material handling vehicles are monitoring the surroundings and the movements by visual detection. In doing so the operator detects that other vehicles are close by and thus can adapt to their presence and then may also adapt speed and position such that the material handling vehicles may operate freely.

### SHORT DESCRIPTION OF THE INVENTION

It has been found that material handling vehicles operating in a narrow aisle or very narrow aisle, may have trouble seeing a vehicle that has already entered the aisle. This may in particular occur when a material handling vehicle if a large load is carried or the operator has his view obstructed by other matters, such as the mast or so. There may be a high risk of colliding with a vehicle that has already entered the aisle if a further material handling vehicle desires to enter the aisle at the same time.

As a solution to this and other problems of the above, there is suggested a material handling vehicle having a longitudinal direction, transversal direction, a first lateral side a second lateral side, a first transversal side and a second transversal side. The vehicle is further comprising a control unit. The vehicle also comprises a bus system for communication with the control unit. There is also comprised a drive motor powering a drive wheel, in the vehicle. The vehicle comprises also a braking system comprising a vehicle brake. Optionally the material handling vehicle comprises a hydraulic system for powering a comprised a lifting device for lifting and transporting goods. The material handling vehicle is arranged such that the control unit communicates with the drive motor and/or the braking system, through the bus system, in order to control the drive motor and/or the brake and thereby control the movement and/or stopping of the material handling vehicle. The vehicle also comprises a first sensor device, wherein the first sensor device is arranged to detect the rack specific device as positioned outside one, or preferably, both of the lateral sides of the material handling vehicle. The first sensor device is arranged to communicate with the control unit at detection of a rack specific device, wherein the control unit is arranged to prevent the material handling vehicle to continue movement a past the rack specific device at receipt of a detection data from the first sensor device, wherein prevention of the movement of the material handling vehicle is made by the control unit by control of the drive motor and/or the brake.

The advantage being that the material handling vehicle has had its safety improved in a material handling situation where more than one material handling vehicle is operating in a warehouse.

In a further development there is suggested a material handling vehicle the control unit is arranged, as long as the first sensor detects the rack specific device, to control the drive motor and/or brake, such that the material handling vehicle is still operable in opposite direction to the direction the material handling vehicle was moving when the rack specific device was detected.

By making the control of the material handling vehicle automated, the safety of operation is even further improved.

In a further development there is suggested a material handling vehicle comprising a second sensor device for detecting the rack specific device. The second sensor device is arranged to detect the rack specific device at a second lateral side of the material handling vehicle. The second sensor device has the same properties as the first sensor device, albeit monitors the second lateral side for a rack specific device. The material handling thus is arranged to not pass a rack specific device detected on the same side as the second sensor device, even if the first sensor device has not detected a rack specific device, and likewise the second sensor device allows for the material handling vehicle to move in the opposite direction also when detection by the second sensor device occurs.

With a second sensor device the smooth operation of the vehicle is improved, in particular it is possible for the vehicle to be allowed to pass a rack specific device that is detected by the second sensor device. Thus, the vehicle may in a simple and effective way, be allowed to exit an aisle even if a rack specific device is detected.

In a further development there is suggested a material handling vehicle further comprising a first detectable device on the first lateral side of the material handling vehicle. There may alternatively be a second detectable device on a second lateral side of the material handling vehicle. The first detectable device is optionally positioned at a longitudinal end of the first lateral side. Optionally the second detectable device is positioned at an opposite longitudinal end in of the second lateral side.

The detectable devices allows for a control unit on a warehouse rack to determine and detect a material handling vehicle entering or exiting an aisle. This allows for better control of the vehicle in the aisle.

In a further development there is suggested a material handling vehicle, wherein the first and/or second detectable devices is/are magnets. Optionally the magnets are arranged in a predetermined direction such that the direction of the material handling vehicle's movement is detectable, Preferably the predetermined direction, correspond to providing the magnet with the respective north and south pole aligned in the longitudinal direction of the material handling vehicle.

Magnets are simple and reliable. They have the ability to give information on movement direction, and they are easy to install.

In a further development there is suggested a material handling vehicle according wherein, the first and/or second detectable devices is/are RFID-tags, preferably two RFID tags at each position, with a longitudinal separation.

RFID tags are very light and also easy to install. They may also have more advanced functions than a magnet, for example one may get information on which aisle has been entered and other restrictions in the aisle regarding height of the material handling vehicle etc.

In a further development there is suggested a material handling vehicle, wherein the first sensor device and the second detectable device are positioned in essentially the same predetermined longitudinal position, but on a respective transversal position which are opposite in transversal direction. Preferably also the second sensor device and the first detectable device are positioned on the same longitudinal position, but on a respective transversal position.

By implementing a predetermined longitudinal position, a safe operation is achieved. It is visibly easy for a person installing the devices to install them in the correct position. Which, makes it more reliable.

In a further development there is suggested a material handling vehicle according wherein the first sensor device and/or second sensor device, comprises a sensor for detecting a reflective material, or wherein the first sensor device and/or second sensor device, comprises an RFID-reader and RFID-writer.

Using RIFID technology gives more possibilities, and make increase safety.

There is further suggested a warehouse rack wherein the rack comprises a rack specific device that may attain a first non-detectable state, and a second detectable state. The rack further comprises is a control unit that is arranged control the rack specific device to alter between the first non-detectable state and the second detectable state. The rack further comprises a rack sensor device, arranged to detect a material handling vehicle being present at one predetermined end of the warehouse rack.

The rack sensor device at detection, is arranged to send a detection data to the rack control unit, such that the rack control unit may use this data to control the rack specific device to be set in the detectable state. Optionally the rack sensor device is arranged to detect a first detectable device positioned on a first lateral side of a material handling vehicle.

The Warehouse rack allows for building a very safe warehouse.

There is further suggested a warehouse rack the rack sensor device is arranged to detect in which longitudinal direction a material handling vehicle is moving.

By detecting the longitudinal direction, it is easier to control if for example the rack specific device should be detectable or not.

There is further suggested a warehouse rack wherein the rack control unit is arranged to set the rack specific device in a non-detectable state, if a material handling vehicle is moving in a first longitudinal direction when being detected, and in a detectable state, when a material handling vehicle is moving in the opposite direction to the first direction.

By keeping functionality in the warehouse rack itself, the demands on the vehicles operating in the warehouse may be lower, and thus even more safety is achieved by this distributed architecture.

There is further suggested a warehouse rack according to wherein the rack specific device comprises a reflective material and/or wherein the rack specific device comprises an RFID tag. Optionally, the RFID tag is a Read and write RFID tag.

There are several options for how the warehouse rack is to operate. It is suggested to use the same technology on the rack as on the material handling vehicle it is cooperating with.

There is further suggested a warehouse system a material handling vehicle (1) according to the above, and a first warehouse rack according to the above. Optionally the system comprises a further warehouse rack also as mentioned above. The both warehouse racks are positioned facing each other such that a warehouse aisle is provided, preferably a narrow warehouse aisle.

The system is a very safe way of operating a warehouse.

There is further suggested a warehouse system wherein the warehouse racks are positioned such that at one end of the aisle the first warehouse rack is provided with a rack specific device, and the corresponding rack specific device of the second warehouse rack is provided at the opposite end of the warehouse aisle.

With a run through aisle, there is an advantage to guard both openings of the aisle.

There is further suggested a warehouse system wherein the first rack specific device is positioned at a first predetermined position in the length direction of the aisle and wherein the rack sensor device is positioned at a second predetermined position in length direction of the aisle, wherein the first predetermined and the second predetermined positions are different in length direction of the aisle, wherein the material handling vehicle travelling in the aisle will pass the first rack specific device with its first sensor device before a detectable device of the material handling vehicle passes the rack sensor device.

The position of the rack sensor device and the rack specific device allows for the safest possible operation of the warehouse system.

There is further suggested a method for modifying a warehouse rack comprising the steps of, providing a warehouse rack. A further step is providing the warehouse rack with a rack control unit. A further step is providing the warehouse rack with a rack specific device, that may alter between a first non-detectable state and a second detectable state. A step is also to provide a rack sensor device to detect the presence of a material handling vehicle. A step is also providing communication between the rack sensor device and the rack control unit, wherein the control unit is arranged such that when a material handling vehicle according to the above, is detected, the rack control unit changes the rack specific device from the first state to the second state, or from the second state to the first state.

Advantage is that an already in operation warehouse rack, may be modified in a swift and simple manner.

There is further suggested a method for modifying a material handling vehicle by providing a control unit. There is also provided a bus system for communication with the control unit. There is also provided a drive motor powering a drive wheel. There is also a step of providing a braking system comprising a vehicle brake. There is also provided a step of providing a first sensor device (10). The control unit is arranged such that a material handling vehicle according to the above is achieved. The material handling vehicle thereby is modified such that it may be controlled with a warehouse rack according to the above.

Advantage is that an already in operation material handling vehicle, may be modified in a swift and simple manner.

### LIST OF DRAWINGS

Fig. 1 discloses a material handling vehicle according to the disclosure.
Fig. 2 discloses a material handling vehicle, a first and second warehouse rack, and a warehouse system according to the disclosure.
Fig. 3 discloses one aspect of a narrow aisle with three material handlings vehicle according to the disclosure.
Fig. 4 discloses one aspect of a warehouse system according to the disclosure.

### DETAILED DESCRIPTION

The present application is related to a material handling vehicle.

The vehicle is in general a vehicle that is used and operates in a warehouse. In particular the warehouse may be a narrow isle warehouse. This means that the material handling vehicle preferably follows the standards in particular the Directive 2006/42/EC of the European Parliament and of the Council of 17 May 2006. The material handling vehicle is for example a narrow isle truck, or a very narrow isle truck.

In the below narrow isle and very narrow isle are used in the same meaning. The both wordings is intended to mean an isle in which two material handling vehicles have trouble or cannot meet or overtake each other.

In general the material handling vehicle has a motor for travel operation.

In general the material handling vehicle has an hydraulic system for powering a lifting device.

In general the material handling vehicle has devices and is arranged such that it may follow a wire or other devices, in an isle of the warehouse.

In general the material handling vehicle is operated by an operating person that travels with the material handling vehicle.

In general the material handling vehicle may also be an AGV, that travels without an operator in a warehouse.

In general the material handling vehicle has a lift device, preferably in form of two forks that may engage and lift a pallet. The lift device is powered by the hydraulic system.

In general the power source of the material handling vehicle is battery.

The motor of the material handling vehicle is preferably an electric motor.

In the present disclosure there is also disclosed a warehouse rack. A warehouse rack is in general a structure that resides on the floor in a warehouse and carries pallets, with material that is to be order picked. In general it comprises a beam structure of steel beams, fixed to the floor and at times also to the ceiling.

The warehouse racks is often positioned close to each other. In many cases so close to each other that two warehouse racks parallel with each other builds a narrow isle. In a narrow isle, material handling vehicles may travel with a gap of only a few centimetres between the material handling vehicle and the respective warehouse rack. In the floor in such a narrow isle there is in general a wire provided, that the material handling vehicle should lock onto. Thus, once the material handling vehicle have entered the narrow isle, the material handling vehicle may only be operated back and forth. The steering is automated in that the material handling vehicle is locked onto the wire.

There may also be other solutions than a wire, for example RFID-tags in the floor.

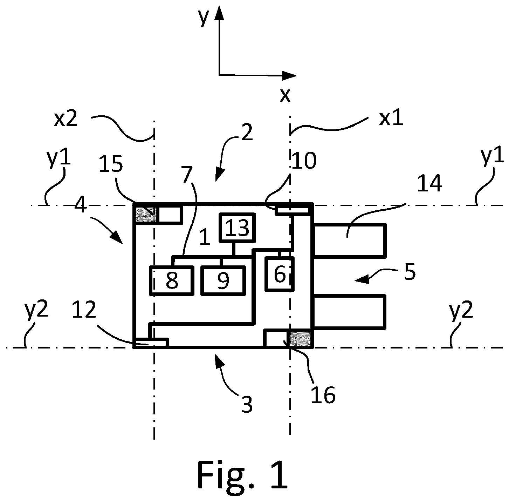

Fig. 1 discloses a material handling vehicle 1 according to the disclosure. The material handling vehicle 1 longitudinal direction x, transversal direction y, a first lateral side 2 a second lateral side 3, a first transversal side 4 and a second transversal side 5.

The material handling vehicle 1 comprises a control unit 6. The control unit 6 is arranged to control the functions of the material handling vehicle 1. The control unit 6 comprises a CPU, memory and communication interfaces to the functions of the vehicle. The control unit 6 may optionally be a main control unit 6, that is connected to sub control units that is specialized in controlling separate functions. In general the material handling vehicle 1 may not operate if the control unit 6 is not operable, or out of service, or if no power is available to the control unit 6.

Further, there is provided a bus system 7 in the material handling vehicle 1. The bus system is in general cables and/or wireless interfaces that allows for the different electronic elements of the material handling vehicle 1, to communicate. In general the bus-system operates under the CAN-protocol.

The material handling vehicle 1 also comprises a drive motor. The drive motor is in general an electric motor. The drive motor is in general attached to a gearbox. The drive motor 8 in general powers one drive wheel. The drive wheel is in general positioned in a central position to the rear i.e. closer to the first transversal side 4 of the material handling vehicle 1. The drive wheel is in general steerable, i.e. it may be rotated around a vertical axis. The drive wheel is in general supported by swivel wheels and linear wheels to stabilize the material handling vehicle 1.

The material handling vehicle 1 also comprises a braking system comprising a wheel brake. The wheel brake is in general acting on the drive wheel. There may be a spring actuated brake that need no power to operate. This spring brake may act on the vertical axle that the drive motor is rotating around. There may also be an electric brake that in general may be the drive motor that is reversing, i.e. using its linings and permanent magnets to act with a force to slow down the drive motor coupled to the single drive wheel. It should be understood that there may also be more than one drive wheel. However, this complicates the design of the material handling vehicle 1. Thus, in general it is preferred that one single centrally positioned drive wheel is used.

The material handling vehicle 1 also comprises an hydraulic system 13. The hydraulic system 13 is in general powered by a pump that pumps hydraulic fluid to a specified hydraulic pressure. The power to the pump is in general proved by a motor. The motor powering the hydraulic pump is in general an electric motor. It is possible to use the same motor to power the drive wheel 8, as the hydraulic pump. In general larger material handling vehicles 1, uses a separate motor for powering the hydraulic pump.

The hydraulic system 13 powers various functions that is in general used for lifting and transporting good. The most common function is to power the lift hydraulic cylinders that is used for lifting and lowering a load carrier 14 of the material handling vehicle. The load carrier 14 is in general forks, that may engage a pallet. However, the load carrier may have other shapes, such as a clamping device for lifting oil drum or paper rolls.

The control unit 6 involves software that may be used to control the drive motor 8 and the brake 9. The control unit 6 uses the bus system 7 to provide these control functions. The control unit 6 is thereby arranged to both control the movement and the braking of the material handling vehicle 1.

The material handling vehicle 1, Fig. 1, further comprises a first sensor device 10. The first sensor device 10 is arranged to detect a rack specific device 11. Thus, the sensor device 10 is arranged to detect the presence of the rack specific device 11. In general the sensor device 10 may thus, not detect other objects or obstacles in warehouse, or at least the sensor device is arranged to send a specific coded signal to the control unit 6, that may be determined by the control unit 6 to be a rack specific device 11. The communication from the sensor device 10 to the control unit 6 is preferred to be made over the bus system 7.

The control unit 6 is thus arranged to receive a detection data that a rack specific device 11 has been detected by the first sensor device 10. The control unit 6 then has a predetermined function to control the material handling vehicle 1 such prevention of movement of the material handling vehicle 1 is provided in the direction of movement of the material handling vehicle 1. Thus, the material handling vehicle may apply brake when it is moving in the mentioned direction, but to the contrary in the other direction the brake is not acting. Thus, the material handling vehicle 1 may move backwards if the detection of a rack specific device 11 is determined to be at hand.

The material handling vehicle may be provided with a second sensor device 12. The second sensor device 12 in general has the same properties as the first sensor device 11. However, the second sensor device is arranged to detect on a different side than the first sensor device 11. The second sensor device may for example detect on the second lateral side 3. The material handling vehicle 1 is arranged not to pass a rack specific device 11 detected on the same side as the sensor device 12 is detecting on. That, it even if the first sensor device 10 has not detected a rack specific device 11, the material handling vehicle 1 is arranged to not be able to continue in the same direction as it was moving when the second sensor device 12 detected a rack specific device. However as with the detection by the first sensor device 11, the material handling vehicle 1, may move in the other direction.

The first and second detection devices 15, 16, are preferably sensors that may detect a reflective material. This may be achieved by that the sensor devices send out a light that is reflected back to the sensor for detection. In essence a photocell device set up.

The material handling vehicle further may comprise a first detectable device 15 on a first lateral side 2. The position is preferred to be at one longitudinal end of the first lateral side. There may also be a further second detectable device 16 on a second lateral side 3.

The material handling vehicle 1 has a preferably a specific position of the first, second sensor devices 10, 12 and the first and second detectable devices 15, 16. Thus, the first sensor device 10 and the second detectable device 16 are positioned in essentially the same longitudinal position x1, Fig. 1, but on a respective transversal position y1, y2 which, are opposite in transversal direction. Also, the second sensor device 12 and the first detectable device 15 are positioned on the same second longitudinal position x2, but on a respective transversal position y1, y2. In general the position of the first and second sensor 10, 12 are on a respective corner which are positioned on a diagonal of the material handling vehicle 1. The same is valid for the first and second detectable device 15, 16, both on the second diagonal of the vehicle 1, and being positioned in a respective corner.

The first detectable device 15 may be a magnet. The magnet 15 may be positioned in a predetermined direction. In general a direction where the magnetic north pole is pointing towards the closest end of the material handling vehicle 1, may be a suitable direction. The other way around is also suitably, i.e. that the south pole of the magnet are pointing towards the closest end of the material handling vehicle. With this configuration it is detectable which direction the material handling vehicle is moving.

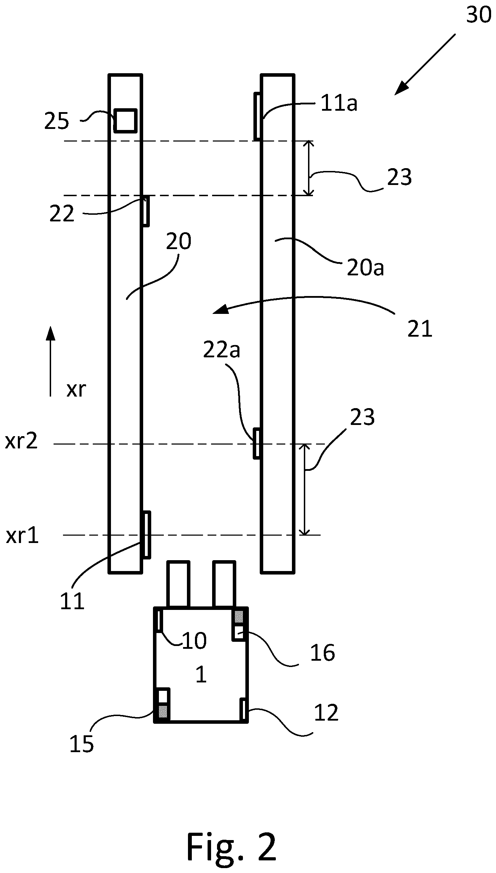

The second detectable device 16 may be a magnet. The second detectable device is preferred to be of the same type as the first detectable device. The position of the second detectable device is preferred to be on the opposite corner of the material handling vehicle 1 to the first detectable device 15. Also the north and south pole should be in opposite direction as compared with the first detectable device. 15. Fig. 1 discloses the magnets in opposite corners of the material handling vehicle 1. The magnets are also disclosed in Figs 2, 3 and 4. The magnets should be fixated in position, in general it will not suffice to only use their magnetic force to keep them in position. A further holder, screw, fastening element or the like is required. If the magnet moves during operation, a problem with detection and also security for the operator may occur.

As the magnets have their poles aligned with the longitudinal direction x, it is possible to use the magnets by a sensor device 22 on a rack 11 to detect the direction the material handling vehicle 1 is moving.

As an alternative, or in combination with magnets, the first and second detectable devices may be RFID tags. In order for a good functionality of the system, the first detectable device may comprise two RFID tags, aligned in longitudinal direction. By having the RFID devices programmed with a specific response to an external reader. It is possible to detect in which order the RFID tags have been detected, and thus also determine the direction the material handling vehicle is moving. Likewise the position of the RFID alternative is in opposite corners of the material handling vehicle in the same position as the discussed magnets.

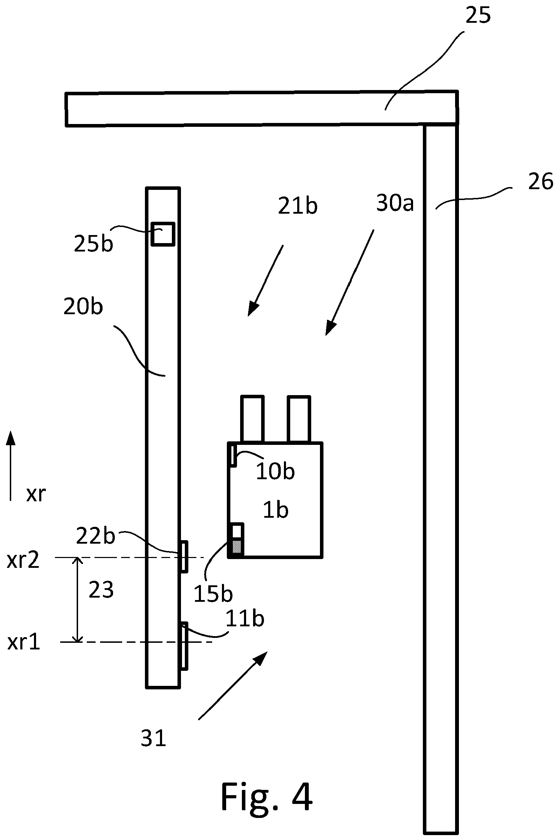

The present disclosure is as said also related to a warehouse rack 20. Such a rack 20 is disclosed in Fig. 4. The rack comprises a rack control unit 25. The rack 20 further comprises a rack specific device 11. The rack specific device may attain a first non-detectable state. In the non-detectable state, a first sensor device 10 or a second sensor device 12 on a material handling vehicle 1, cannot detect the rack specific device 11. This may be arranged in many ways, one preferred way is that the rack specific device 11 comprises a reflective surface. This reflective surface may be move away from the side of the rack 20 which material handling vehicles 1 may move by. The moving away may be arranged by having the rack specific device 11 to be mounted on an axle that may rotate the reflective surface away, into the rack itself. The same may be applicable with a plate having an RFID tag situated on one side. The plate being arranged not to let a signal seeking to activate/detect the RFID-tag, through the plate. This could be a lead plate or any other more dense material.

The detectable device 11 is preferably positioned at one end of the rack 20.

The warehouse rack 20 also comprises a rack sensor device 22, as seen in Fig. 4. The rack sensor device 22 is arranged such that it may detect a material handling vehicle at one end opposite to the end where the rack specific device 11 is positioned. The rack specific device 11 and the rack sensor device are both in communication with the rack control unit 25. Thus, if a rack sensor device 22, detects a material handling vehicle 1, the control unit 25 may set the rack specific device 11 in a detectable state.

The rack sensor device 22 is preferred to be arranged to detect a detectable device 15, 16 of a material handling vehicle 1. The rack sensor device 22, may thus be a magnetic detector that may detect detectable devices being magnets on the material handling vehicle 1. The rack sensor device 22 may also be an RFID reader, that may detect RFID-tags as described on the material handling vehicle 1 above.

The rack sensor device 22 is thus arranged to detect in which direction the material handling vehicle is moving.

The rack control unit 25, is arranged such that it may set the rack specific device 22 in a non-detectable state if a material handling vehicle 1 moves past the rack sensor device 22 in a first direction. The control unit 25 is further arranged such that the rack specific device 11 may be set in a detectable state if the material handling vehicle is passing the rack sensor device 22 in the opposite direction.

The rack specific device 11 may be a reflective material. The rack specific device 11 may be an RFID tag. Other variants of rack specific devices is possible also, such as an NFC device.

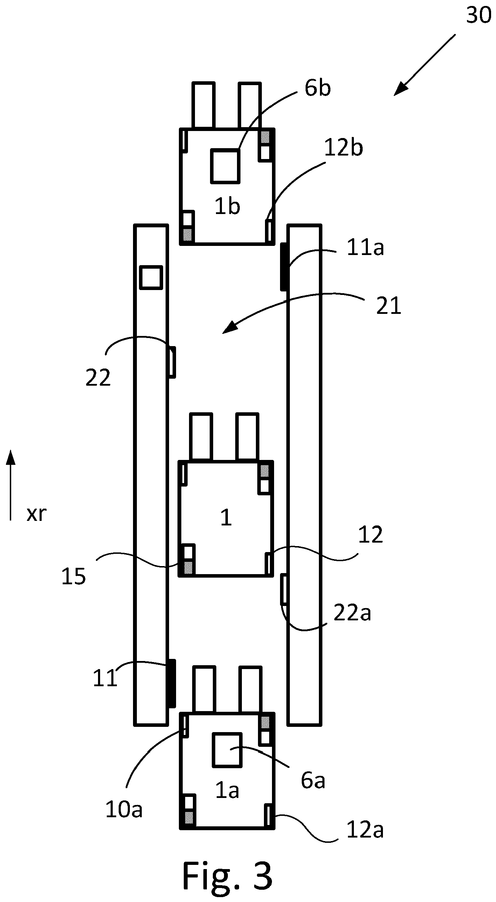

There is also disclosed a warehouse system 30, in which both the discussed material handling vehicle 1 and the discussed warehouse rack 20 is operating together. In a preferred version of the warehouse system as disclosed in Fig. 2 and Fig. 3, there may at least two warehouse racks 20, 20a that together form a very narrow isle 21. In a preferred variant of this system the warehouse rack 20a shares the rack control unit 25 with the first warehouse rack 20.

In a preferred way of operating the system 30, a material handling vehicle 1 entering the aisle as disclosed in Fig. 2, alters the rack specific devices 11, and 11a to a detectable state. This is achieved by the sensor 22a detecting the detectable device 16 on the material handling vehicle 1, as it enters the aisle 21. Due to that there is a predetermined distance 23 between the end of the rack specific device 11, on the warehouse rack 20, the material handling vehicle 1, may continue forward, without detecting the rack specific device 11. As the detector 10 leaves the rack specific device 11, the sensor 22a detects the material handling vehicle 1, and sends a detection signal to the rack control unit 25.

The rack specific device 11 is controlled by the control unit 25 to alter such that it is detectable. A new material handling vehicle 1a, Fig. 3, now seeking to enter the aisle 11, will at the same position as the material handling vehicle 1 first entered, detects the rack specific device 11. The detection in this case is made by the first sensor device 10a. At this detection, the control unit 6a of the material handling vehicle 1a, will not allow the vehicle 1a to enter the aisle 21. The operator is obliged to reverse out of the aisle 21.

In Fig 3 there is also disclosed a further material handling vehicle 1b. As can be seen this vehicle 1b is seeking to reverse into the aisle 21. However in the preferred way of operating the system, also the rack specific device 11a has been controlled by the control unit 25 of the warehouse rack 11, into a detectable state. The second sensor device 12b of the vehicle 1b sends a detection data to the control unit 6b of the vehicle 1b. The control unit 6b, controls the motor and/or the brake of the vehicle 1b such that the vehicle may not enter the aisle 21.

As the vehicle 1 leaves the aisle 21, the rack sensor device 22 detects the detectable device 15 and the rack specific devices 11 and 11a will alter to a non-detectable state. Thus, a new material handling vehicle may enter the aisle 21. In this process the predetermined distance 23 helps, as the position of the second sensor device 12 and the first detectable device 15 is such that the at the detection by rack sensor device 22, the second sensor device 12 is not in a position to detect the rack specific device 11a.

Thus, it is achieved a system 30 where only one material handling vehicle 1 may enter an aisle 21.

A small warehouse system 30b is disclosed in Fig. 4 In this case for example a wall 25 limits one side such that no material handling vehicle may enter the same aisle 21 as a first material handling vehicle 1. There may also optionally be a wall 26 delimiting the movable space for a material handling vehicle 1b. It may be of interest to prevent a vehicle 1 from entering from the open end 31 of the aisle 21b. In this case there is a distance 23 between the rack specific device 11b and the rack sensor device 22b, that allows for the first material handling vehicle 1 to enter the aisle 30b, but then the rack specific device 11b is altered to a detectable state and a further material handling vehicle may not enter. In the specific example of Fig. 4, the material handling vehicle 1b may be programmed to exit if the first sensor device 10 detects the same rack specific device 11b after a first detection. Also, the rack control unit 25 in the same operation alters the detectable device 11b to a non-detectable state. Thus, this allowing the material handling vehicle 1b to reverse out of the aisle 21b.

The system 30b is basically the same system as the previous discussed system 30 with two racks. So basically the features of system 30b may also be implemented to system 30. In warehouse system 30, for example the rack sensor device 22a and the rack specific devices 11 may be implemented on the same warehouse rack 20, with the predetermined distance 23 and have the same functionality as in the system 30b with sensor 22b and rack specific device 11b.

## Claims

1. Material handling vehicle (1) having a longitudinal direction (x), transversal direction (y), a first lateral side (2) a second lateral side (3), a first transversal side (4) and a second transversal side (5), comprising:
- a control unit (6)
- a bus system (7) for communication with the control unit (6),
- a drive motor (8) powering a drive wheel,
- a braking system comprising a vehicle brake (9),
preferably the material handling vehicle comprises a hydraulic system (13) for powering a comprised a lifting device (14) for lifting and transporting goods,
wherein the material handling vehicle (1) is arranged such that the control unit (6) communicates with the drive motor (8) and/or the braking system, through the bus system (7), in order to control the drive motor (8) and/or the brake (9) and thereby control the movement and/or stopping of the material handling vehicle (1),
**characterized in that**
further comprised is
- a first sensor device (10),
wherein the first sensor device (10) is arranged to detect the rack specific device (11) as positioned outside one, or preferably, both of the lateral sides (2, 3) of the material handling vehicle (1),
wherein the first sensor device (10) is arranged to communicate with the control unit (6) at detection of a rack specific device (10), wherein the control unit (6) is arranged to prevent the material handling vehicle (1) to continue movement a past the rack specific device (10) at receipt of a detection data from the first sensor device (10), wherein prevention of the movement of the material handling vehicle is made by the control unit (6) by control of the drive motor (8) and/or the brake (9).

2. Material handling vehicle according to claim 1, wherein the control unit (6) is arranged, as long as the first sensor (10) detects the rack specific device (11), to control the drive motor (8) and/or brake (9), such that the material handling vehicle (1) is still operable in opposite direction to the direction the material handling vehicle (1) was moving when the rack specific device (11) was detected.

3. Material handling vehicle according to claim 1 or 2, wherein there is further comprised:
a second sensor device (12) for detecting the rack specific device (11), wherein the second sensor device (12) is arranged to detect the rack specific device (11) at a second lateral side (3) of the material handling vehicle (1), wherein the second sensor device (12) has the same properties as the first sensor device (10), albeit monitors the second lateral side (3) for a rack specific device (11), wherein the material handling (1) thus is arranged to not pass a rack specific device (11) detected on the same side as the second sensor device (12), even if the first sensor device (10) has not detected a rack specific device (11), and likewise the second sensor device (12) allows for the material handling vehicle (1) to move in the opposite direction also when detection by the second sensor device (12) occurs.

4. Material handling vehicle (1) according to any of the claims above, further comprising a first detectable device (15) on the first lateral side (2) of the material handling vehicle (1) and/or a second detectable device (16) on a second lateral side (3) of the material handling vehicle (1), preferably the first detectable device is positioned at an longitudinal end of the first lateral side, and/or optionally the second detectable device (16) is positioned at an opposite longitudinal end in of the second lateral side (3).

5. Material handling vehicle (1), according to claim 4, wherein the first and/or second detectable devices is/are magnets (15, 16), preferably the magnets (15, 16) are arranged in a predetermined direction such that the direction of the material handling vehicle's movement is detectable, preferably wherein the predetermined direction correspond to providing the magnet with the respective north and south pole aligned in the longitudinal direction of the material handling vehicle (1).

6. Material handling vehicle (1) according to claim 4 or 5, wherein the first and/or second detectable devices is/are RFID-tags, preferably two RFID tags at each position, with a longitudinal separation.

7. Material handling vehicle according to any of the claims 4, 5, or 6 wherein the first sensor device (10) and the second detectable device (16) are positioned in essentially the same predetermined longitudinal position (x1), but on a respective transversal position (y1, y2) which are opposite in transversal direction, preferably also the second sensor device (12) and the first detectable device (15) are positioned on the same longitudinal position (x2), but on a respective transversal position (y1, y2).

8. Material handling vehicle (1), according to any of the claims above, wherein the first sensor device and/or second sensor device (10, 12), comprises an sensor for detecting a reflective material, or wherein the first sensor device and/or second sensor device (10, 12), comprises an RFID-reader and RFI D-writer.

9. Warehouse rack (20) arranged to be used with a material handling vehicle (1) according to any of the claims 1-8,
wherein the rack (20) comprises a rack specific device (11) that may attain a first non-detectable state, and a second detectable state,
wherein the rack (20) further comprises is a control unit (25) that is arranged control the rack specific device (11) to alter between the first non-detectable state and the second detectable state,
wherein the rack (20) further comprises a rack sensor device (22), arranged to detect a material handling vehicle (1) being present at one predetermined end of the warehouse rack (20),
wherein the rack sensor device (22) at detection, is arranged to send a detection data to the rack control unit (25), such that the rack control unit (25) may use this data to control the rack specific device (11) to be set in the detectable state,
preferably the rack sensor device (22) is arranged to detect a first detectable device (15) positioned on a first lateral side (2) of a material handling vehicle (1).

10. Warehouse rack (20) according to claim 9, wherein the rack sensor device (22) is arranged to detect in which longitudinal direction (y) a material handling vehicle (1) is moving.

11. Warehouse rack (20) according to any of the claims 9-10, wherein the rack control unit (25) is arranged to set the rack specific device (11) in a non-detectable state, if a material handling vehicle (1) is moving in a first longitudinal direction when being detected, and in a detectable state, when a material handling vehicle (1) is moving in the opposite direction to the first direction.

12. Warehouse rack (20) according to any of the claims 9-11, wherein the rack specific device (11) comprises a reflective material and/or wherein the rack specific device (11), comprises an RFID tag, preferably an Read and write RFID tag.

13. Warehouse system (30) comprising:
a material handling vehicle (1) according to any of the claims 1-8, and
a first warehouse rack (20) according to any of the claims 9-12,
preferably the system comprises a further warehouse rack (20a) according to any of the claims 9-12, wherein the both warehouse racks (20, 20a) are positioned facing each other such that an warehouse aisle (21) is provided, preferably a narrow warehouse aisle.

14. Warehouse system (30) according to claim 13, wherein the warehouse racks (20, 20a) are positioned such that at one end of the aisle (21) the first warehouse rack (20) is provided with a rack specific device (11), and the corresponding rack specific device (11a) of the second warehouse rack (20a) is provided at the opposite end of the warehouse aisle (21).

15. Warehouse system (30) according to claim 13 or 14, wherein the first rack specific device (11) is positioned at a first predetermined position (xr1) in the length direction (xr) of the aisle (21) and wherein the rack sensor device (22a; 22b) is positioned at a second predetermined position in length direction (xr) of the aisle (21), wherein the first predetermined and the second predetermined positions (xr1, xr2) are different in length direction (xr) of the aisle (21), wherein the material handling vehicle (1) travelling in the aisle (21) will pass the first rack specific device (11) with its first sensor device (10) before a detectable device (16) of the material handling vehicle passes the rack sensor device (22a; 22b).

16. Method for modifying a warehouse rack, comprising the steps of:
- providing a warehouse rack (20),
- providing the warehouse rack with a rack control unit (25),
- providing the warehouse rack(20) with a rack specific device (11), that may alter between a first non-detectable state and a second detectable state,
- providing a rack sensor device (22) to detect the presence of a material handling vehicle (1),
- providing communication between the rack sensor device (22) and the rack control unit (25),
wherein the control unit (25) is arranged such that when a material handling vehicle (1) according to any of the claims 1-8, is detected, the rack control unit (25) changes the rack specific device (11) from the first state to the second state, or from the second state to the first state.

17. Method for modifying a material handling vehicle (1),
by providing:
- a control unit (6)
- a bus system for communication with the control unit (7),
- a drive motor powering a drive wheel,
- a braking system comprising a vehicle brake (9),
- a first sensor device (10),
wherein the control unit (6) is arranged such that a material handling vehicle according to any of the claims 1-8 is achieved,
wherein the material handling vehicle (1) thereby is modified such that it may be controlled with a warehouse rack (20) according to any of the claims 9-12.
